# EUROPÄISCHE PATENTSCHRIFT

(11) **EP 1 114 796 B1**
(45) Veröffentlichungstag und Bekanntmachung des Hinweises auf die Patenterteilung: **21.05.2003**
(21) Anmeldenummer: 00127400.0
(22) Anmeldetag: 14.12.2000
(51) Int. Cl.: C01G 55/00, C22B 11/06

(54) **Verfahren zur Gewinnung von Osmium und Ruthenium aus Edelmetallkonzentraten**
Process for the winning of osmium and ruthenium from precious metal concentrates
Procéde pour l'obtention d'osmium et de ruthenium à partir de concentrés de metaux precieux

(30) Priorität: 05.01.2000 DE 10000274
(43) Veröffentlichungstag der Anmeldung: 11.07.2001
(73) Patentinhaber: W. C. Heraeus GmbH & Co. KG, 63450 Hanau (DE)
(72) Erfinder: Schäfer, Dieter, 35516 Münzenberg (DE); Meyer, Horst, Dr., 63674 Altenstadt (DE); Grehl, Matthias, Dr., 60388 Frankfurt (DE)
(74) Vertreter: Kühn, Hans-Christian

(56) Entgegenhaltungen:
- US-A- 4 390 366
- DATABASE WPI Section Ch, Week 199403 Derwent Publications Ltd., London, GB; Class E31, AN 1994-023771 XP002165992 & SU 1 784 034 A (AS SIBE INORG CHEM INST) , 23. Dezember 1992 (1992-12-23)

## Beschreibung

Die Erfindung betrifft ein Verfahren zur Gewinnung von Osmium und Ruthenium aus Edelmetallkonzentraten.

In Chem. Abstr. 92 (1980) Ref. Nr. 157222 W ist ein Verfahren zur Gewinnung von Osmium und Ruthenium aus diese Elemente enthaltenden Platin-Legierungen offenbart, bei dem die Legierung mit Salpetersäure versetzt und die entstehende Lösung derart erhitzt wird, dass Osmiumtetroxid abgast.

Der aus dem Stand der Technik bekannte und allgemein verwendete Verfahrensweg zur Ruthenium- und Osmiumgewinnung aus Erzkonzentrat ist wie folgt:

Zunächst wird das Erzkonzentrat einer alkalisch oxidierenden Schmelze mittels Hydroxid unterworfen und anschließend Ruthenium und Osmium mittels Ethanol gefällt. Die feste Phase wird wiederum mittels einer alkalisch oxidierenden Schmelze aufgeschlossen und gelöst. Ruthenium wird abdestilliert und mittels einer HCI-sauren Absorptionslösung aufgefangen. Anschließend wird die Absorptionslösung in einem Umlaufverdampfer eingedampft, um anschließend Osmium mittels H₂O₂ abzudestillieren, während in der flüssigen Phase Rutheniumchlorid vorliegt. Das aufgefangene Osmiumtetroxid wird in einem alkalischen Absorber absorbiert, sulfidisch gefällt, der Niederschlag von der flüssigen Phase getrennt, alkalisch oxidierend aufgeschmolzen und schließlich mittels HCI-Zugabe als Osmiumtetroxid abdestilliert, um anschließend in einem alkalischen Absorber absorbiert, nach einer Alkoholfällung abfiltriert und schließlich mittels Wasserstoff zum reinen Osmium reduziert zu werden.

Dieses Verfahren ist mit einer Vielzahl von u. a. auch zeitaufwendigen und somit kostenintensiven Schritten verbunden, wobei in vielen Fällen die Osmiumausbeute zu wünschen übrig lässt.

Aus dem vorgenannten ergibt sich das Problem, mit Hilfe eines neuartigen Verfahrens zur Gewinnung von Osmium und Ruthenium aus Edelmetallkonzentraten die oben genannten Nachteile zumindest teilweise zu beseitigen, insbesondere ein kostengünstiges und weniger kompliziertes Verfahren bei möglichst hoher Osmium-Ausbeute bereitzustellen.

Dieses Problem wird erfindungsgemäß durch ein Verfahren nach Anspruch 1 gelöst.

Beim erfindungsgemäßen Verfahren wird zunächst ein Osmium und Ruthenium enthaltendes Edelmetallkonzentrat mit Salpetersäure bei einer Höchsttemperatur von ca. T = 30 °C versetzt, um daraufhin die entstandene Suspension/Lösung auf eine Mindesttemperatur von ca.
T = 85 °C zu erwärmen. Dabei wird das entstehende Osmiumtetroxid in einer Absorptionslösung (es handelt sich um eine Hydroxid-Lösung) aufgefangen, während im Anschluss daran die übriggebliebene und vom Osmium befreite Suspension/Lösung, die eine Temperatur von ca. T = 20 °C bis 30 °C aufweist bei einer maximalen Reaktionstemperatur von ca. T = 65 °C mit Hydroxid versetzt wird. Die Suspension/Lösung wird dabei alkalisch gestellt. Schließlich wird diese mit einem Mittel zur oxidativen Auslaugung des Rutheniums, beispielsweise mittels Durchleiten von Chlorgas bei gleichzeitiger Bildung einer das Ruthenium oxidierenden Hypochloritlösung, versetzt.

Nach der alkalischen oxidativen Auslaugung bleibt ein unlöslicher Feststoff übrig, der noch eine geringe Menge Ruthenium enthält. Dieser Rückstand wird durch Absitzen lassen/Abdekantieren von der Ruthenatlösung getrennt.

Es ist vorteilhaft, wenn beim Auffangen des entstehenden Osmiumtetroxides eine KOH-Absorptionslösung verwendet wird, da bei der anschließenden Osmiumfällung mittels Ethanolzusatz ausgezeichnete Ergebnisse festzustellen sind.

Weiterhin ist es von Vorteil, wenn beim Versetzen der Suspension/Lösung mit Hydroxid dieses langsam und/oder portionsweise zur Suspension/Lösung gegeben wird, um eine kontrollierte Neutralisationsreaktion bei nicht zu hoher Temperatur (nämlich nicht höher als ca. T = 65 °C) zu gewährleisten.

Weiterhin hat es sich in vorteilhafter Weise bewährt, wenn die Absorptionslösung nach Auffangen des entstandenen Osmiumtetroxides derart mit Ethanol versetzt wird, dass die entstehende Absorptions-/Ethanol-Lösung einen maximalen Ethanolgehalt von ca. 5 Vol.-% aufweist, da hier optimale Absorptions- und Fällungseigenschaften zu verzeichnen sind.

Darüber hinaus ist es vorteilhaft, wenn nach der Absorption des Osmiumtetroxides zur Absorptionslösung portionsweise Ethanol zugegeben wird, da sich durch diese Verfahrensweise eine optimale Fällung und ein geringer Osmiumrestgehalt einstellen.

Zur weiteren Verringerung des Osmiumrestgehaltes ist es vorteilhaft, wenn während und nach der Ethanolzugabe die Absorptionslösung gerührt wird.

Darüber hinaus ist es von Vorteil, wenn die Suspension/Lösung mit festem NaOH alkalisch gestellt wird, da auf diese Art und Weise ein ausgesprochen geringer Volumenzuwachs anfällt. Die Zugabe von festen NaOH findet vorteilhafterweise bei einer Temperatur von ca. T = 30 °C bis ca. T = 65 °C statt, da hiermit ein sehr hoher Anteil an Ruthenium aktiviert und herausgelöst werden kann.

Schließlich ist es zum oxidativen Auslaugen des Rutheniums von besonderem Vorteil, wenn Hypochlorit oder Peroxodisulfat verwendet wird, da somit im Vergleich zum klassischen Einleiten von Chlorgas in eine Hydroxidlösung eine höhere Oxidationsmittelausbeute unter Umgehung einer Sauerstoffbildung erreicht werden kann.

Das nachfolgende Beispiel dient zur Erläuterung der Erfindung.

### Anwendungsbeispiel Os-Destillation und Ru-Laugung

### Einsatzmaterial

291,2 kg getrockneter und gemahlener Rückstand aus Os/Ru-Alkoholfällung.

### Anlage

### 800 l Stahl-Email-Kessel

Absorptionsanlage bestehend aus zwei 50 I Absorbern befüllt mit je 45 I KOH (25 %) und Wasserstrahlpumpe zum Umpumpen der Gasphase.

### Verfahrensbeschreibung

Der Rückstand wurde in 3 Portionen zu je ca. 100 kg bearbeitet.

### 1. Os-Destillation

Im Reaktionskessel wurden ca. 50 I VE-Wasser und das Kondensat (ca. 120 I) aus der vorangegangenen Destillation vorgelegt und danach ca. 100 kg Rückstand in den Kessel eingesaugt. Der Kessel wurde verschlossen und der Gaskreislauf eingeschaltet. Bei Raumtemperatur wurden innerhalb von 30 Minuten 100 I 52%-ige Salpetersäure zugepumpt. Danach wurde der Kessel auf ca. 85 °C aufgeheizt und in ca. 10 Stunden das Os abdestilliert. Das entstehende OsO₄ wurde in der Absorptionsanlage in KOH (25 %) absorbiert.

### 2. Ru-Laugung

Die Suspension wurde auf ca. 30 °C abgekühlt und unter Kühlen portionsweise 75 kg festes Natriumhydroxid zugesetzt. Die Zugabegeschwindigkeit wurde so gewählt, dass die Temperatur 65 °C nicht übersteigt. Anschließend wurde wieder abgekühlt und bei ca. 30 °C so lange Natriumhypochloritlösung (∼ 2 mol/l) zugegeben, bis die Suspension deutlich aufschäumte (ca. 150 - 180 I NaOCl-Lösung). Es wurde 4 Stunden nachgerührt und danach die Ruthenatlösung in eine Gitterbox verpumpt.

### 3. Osmatfällung

Nach jeder Destillation wurde der erste Absorber entleert und mit frischer 25%-iger KOH befüllt. Der zweite Absorber wurde erst nach jeder zweiten Os-Destillation gewechselt. Die Osmatlösung wurde zu größeren Portionen zusammengefasst. Nachdem der gesamte Rückstand bearbeitet war, wurde die Absorberlösung (ca. 200 I) unter kräftigem Rühren portionsweise mit 10 I vergälltem Ethanol versetzt. Es wurde so lange gerührt, bis sich ein violetter Rückstand bildete und die überstehende Lösung klar war. Der Rückstand wurde über Nacht absitzen gelassen, die überstehende Lösung abgehebert, der Rückstand filtriert und mit ca. 3 I vergälltem Ethanol gewaschen und trockengesaugt. Das Kaliumosmat wurde ausgewogen und zur Os-Reinigung weitergeleitet.

### Auswertung

| Os-Bilanz | | | | |
|---|---|---|---|---|
| **1.1 Analysenergebnisse** | | | **1.1.1.1 Bilanzierung** | |
| | **Rückstand** | **Kaliumosmat** | **Rückstand** | **Kaliumosmat** |
| **Menge** | 291,2 kg | 7.800 g | Einsatz absolut | Menge bez. Einsatz |
| **Os** | 1,49 % | 4.463 g | 4.200 g | 97,3 % |

| Ru-Bilanz | | | | |
|---|---|---|---|---|
| **1.1.1.2 Analysenergebnisse** | | | **1.1.1.3 Bilanzierung** | |
| | **Rückstand** | **Ruthenatlöung Teil 1 - 3** | **Rückstand** | **Ruthenatlösung Teil 1 - 3** |
| **Menge** | 291,2 kg | 1.830 I | Einsatz absolut | Menge bez. Einsatz |
| **Ru** | 17,44 % | 24,3 g/l* | 50,8 kg | 87,5 % |

| | | | | |
|---|---|---|---|---|
| * Lösung durch Absitzenlassen vom Feststoff getrennt | | | | |

## Patentansprüche

1. Verfahren zur Gewinnung von Osmium und Ruthenium aus Edelmetallkonzentraten durch Versetzen des Osmium und Ruthenium enthaltenden Edelmetallkonzentrates mit Salpetersäure und Erwärmen der entstandenen Suspension/Lösung auf eine Mindesttemperatur von 85 °C, **dadurch gekennzeichnet, dass**
a) das Versetzen des Edelmetallkonzentrats bei einer Höchsttemperatur von 30 °C und das Erwärmen der entstandenen Suspension/Lösung auf eine Mindesttemperatur von 85 °C vorgenommen wird,
b) das Osmiumtetroxid in einer Absorptionslösung aufgefangen wird;
c) die von Osmium befreite, auf eine Temperatur von 20 °C bis 30 °C abgefüllte Suspension/Lösung mit einem Hydroxid bei einer maximalen Reaktionstemperatur von ca. 65 °C auf einen alkalischen pH-Wert eingestellt wird und
d) die alkalische Suspension/Lösung aus Schritt c) mit einem Mittel zur oxidierenden Auslaugung des Rutheniums unter Bildung einer Ruthenatlösung versetzt wird.

2. Verfahren nach Anspruch 1, **dadurch gekennzeichnet, dass** im Schritt b) eine KOH-Absorptionslösung verwendet wird.

3. Verfahren nach einem der Ansprüche 1 bis 2, **dadurch gekennzeichnet, dass** im Schritt c) langsam und/oder portionsweise das Hydroxid zur Suspension/Lösung gegeben wird.

4. Verfahren nach einem der Ansprüche 1 bis 3, **dadurch gekennzeichnet, dass** die Absorptionslösung nach Schritt b) derart mit Ethanol versetzt wird, dass die entstehende Absorptions-/Ethanol-Lösung einen maximalen Ethanolgehalt von 5 Vol.-% aufweist.

5. Verfahren nach einem der Ansprüche 1 bis 4, **dadurch gekennzeichnet, dass** nach der Absorption des Osmiumtetroxides zur Absorptionslösung portionsweise Ethanol zugegeben wird.

6. Verfahren nach Anspruch 5, **dadurch gekennzeichnet, dass** während und nach der Ethanolzugabe die Absorptionslösung gerührt wird.

7. Verfahren nach einem der Ansprüche 1 bis 6, **dadurch gekennzeichnet, dass** die Suspension/Lösung im Schritt c) mit festem NaOH alkalisch gestellt wird.

8. Verfahren nach Anspruch 7, **dadurch gekennzeichnet, dass** die Zugabe von festem NaOH bei einer Temperatur von ca. 30 °C bis ca. 65 °C durchgeführt wird.

9. Verfahren nach einem der Ansprüche 1 bis 8, **dadurch gekennzeichnet, dass** zum oxidativen Auslaugen des Rutheniums Hypochlorit oder Peroxodisulfat verwendet wird.

## Claims

1. Process for obtaining osmium and ruthenium from noble metal concentrates by adding nitric acid to the osmium- and ruthenium-containing noble metal concentrate and heating the suspension/solution formed to a minimum temperature of 85°C, **characterized in that**
a) the addition to the noble metal concentrate is carried out at a maximum temperature of 30°C and the heating of the suspension/solution formed is carried out to a minimum temperature of 85°C,
b) the osmium tetroxide is collected in an absorption solution,
c) the suspension/solution freed from osmium and filled at a temperature of 20°C to 30°C is adjusted to an alkaline pH with a hydroxide at a maximum reaction temperature of about 65°C and
d) an agent for oxidatively bleaching out ruthenium with the formation of a ruthenium solution is added to the alkaline suspension/solution of step c).

2. Process according to Claim 1, **characterized in that** a KOH absorption solution is used in step b).

3. Process according to either of Claims 1 and 2, **characterized in that**, in step c), the hydroxide is added slowly and/or in portions to the suspension/solution.

4. Process according to any of Claims 1 to 3, **characterized in that** ethanol is added to the absorption solution after step b) so that the absorption/ethanol solution formed has a maximum ethanol content of 5% by volume.

5. Process according to any of Claims 1 to 4,
**characterized in that** ethanol is added in portions to the absorption solution after the absorption of the osmium tetroxide.

6. Process according to Claim 5, **characterized in that** the absorption solution is stirred during and after the addition of ethanol.

7. Process according to any of Claims 1 to 6, **characterized in that** the suspension/solution is rendered alkaline with solid NaOH in step c).

8. Process according to Claim 7, **characterized in that** the addition of solid NaOH is carried out at a temperature of about 30°C to about 65°C.

9. Process according to any of Claims 1 to 8, **characterized in that** hypochlorite or peroxodisulphate is used for oxidatively bleaching out the ruthenium.

## Revendications

1. Procédé pour la récupération d'osmium et de ruthénium à partir de concentrés de métaux précieux par réaction du concentré de métaux précieux contenant de l'osmium et du ruthénium avec de l'acide nitrique et chauffage de la suspension/solution obtenue à une température minimale de 85°C, **caractérisé en ce que**
a) on procède à la réaction du concentré de métaux précieux à une température maximale de 30°C et au chauffage de la suspension/solution produite à une température minimale de 85°C,
b) on piège le tétraoxyde d'osmium dans une solution d'absorption,
c) on ajuste la suspension/solution libérée de l'osmium, introduite à une température de 20°C à 30°C à une valeur de pH alcalin avec un hydroxyde à une température de réaction maximale d'environ 65°C et
d) on fait réagir la suspension/solution alcaline de l'étape c) avec un milieu pour le lessivage oxydant du ruthénium avec formation d'une solution de ruthénate.

2. Procédé selon la revendication 1, **caractérisé en ce que** l'on utilise dans l'étape b) une solution d'absorption de KOH.

3. Procédé selon l'une quelconque des revendications 1 à 2, **caractérisé en ce que** l'on introduit dans l'étape c) l'hydroxyde dans la suspension/solution lentement et/ou par parties.

4. Procédé selon l'une quelconque des revendications 1 à 3, **caractérisé en ce que** la solution d'absorption après l'étape b) réagit avec de l'éthanol de telle sorte que la solution d'absorption/éthanol produite présente une teneur maximale en éthanol de 5 % en volume.

5. Procédé selon l'une quelconque des revendications 1 à 4, **caractérisé en ce que** l'on ajoute à la solution d'absorption après l'absorption du tétraoxyde d'osmium de l'éthanol par portions.

6. Procédé selon la revendication 5, **caractérisé en ce que** l'on agite la solution d'absorption pendant et après l'addition d'éthanol.

7. Procédé selon l'une quelconque des revendications 1 à 6, **caractérisé en ce que** la suspension/solution dans l'étape c) est ajustée alcalinement avec du NaOH solide.

8. Procédé selon la revendication 7, **caractérisé en ce que** l'on réalise l'addition de NaOH solide à une température d'environ 30°C à environ 65°C.

9. Procédé selon l'une quelconque des revendications 1 à 8, **caractérisé en ce que** l'on utilise pour le lessivage oxydant du ruthénium de l'hypochlorite ou du peroxodisulfate.
